# EUROPÄISCHE PATENTSCHRIFT

(11) **EP 3 526 880 B1**
(45) Veröffentlichungstag und Bekanntmachung des Hinweises auf die Patenterteilung: **30.06.2021**
(21) Anmeldenummer: 18700445.2
(22) Anmeldetag: 02.01.2018
(51) Int. Cl.: H02K 1/18, H02K 7/18

(54) **TRAGSTRUKTUR EINES BLECHPAKETS EINES STATORSEGMENTS**
SUPPORT STRUCTURE OF A STACK OF METAL SHEETS OF A STATOR SEGMENT
STRUCTURE PORTANTE D'UN NOYAU FEUILLETÉ D'UN SEGMENT DE STATOR

(30) Priorität: 18.01.2017 EP 17151989
(43) Veröffentlichungstag der Anmeldung: 21.08.2019
(73) Patentinhaber: Flender GmbH, 46395 Bocholt (DE)
(72) Erfinder: JÖCKEL, Andreas, 90408 Nürnberg (DE); LINDMEIER, Andreas, 94099 Ruhstorf (DE); SCHOBER, Franz Xaver Michael, 94154 Neukirchen vorm Wald (DE); SEIL, Andreas, 94167 Tettenweis (DE)
(74) Vertreter: Michalski Hüttermann & Partner Patentanwälte mbB
(86) Internationale Anmeldenummer: PCT/EP2018/050008
(87) Internationale Veröffentlichungsnummer: WO 2018/134043

(56) Entgegenhaltungen:
- EP-A1- 2 670 025
- EP-A1- 2 838 182
- WO-A1-2014/000757
- CN-U- 203 094 280
- GB-A- 1 571 793

## Beschreibung

Die Erfindung betrifft eine Tragstruktur eines Blechpakets, eines Statorsegments, eines Außenläufergenerators, ein Statorsegment, einen Stator, einen Außenläufergenerator, eine Windkraftanlage als auch die Herstellverfahren eines Statorsegments bzw. eines Stators.

Bei sehr großen dynamoelektrischen Maschinen, insbesondere langsam laufenden Torque-Motoren und Generatoren ist es von Vorteil, dass Blechpakete des Stators nicht als Ganzes zu fertigen. Deshalb wird das Blechpaket des Stators mit Wicklungen in segmentierter Bauweise, d.h. in Segmenten aufgebaut, die später zu einem geschlossenen Ring dem Stator montiert werden.

Bei großen direkt angetriebenen Windkraftgeneratoren mit Außenläufer erfolgt der Einbau der einzelnen Statorsegmente mittels Verschraubung dieser Statorsegmente an Flanschen, die mit dem Maschinenbauraumen der Gondel der Windkraftanlage verbunden sind. Eine segmentierte Bauweise bei Statoren mit Innenläufern ist beispielsweise aus der US 2012/0133145 A1 oder auch aus der WO 2014/000757 A1 bekannt.

In der EP 2 670 025 A1 wird ein Kühltragelement für ein Statorsegment eines Stators einer elektrischen Maschine, insbesondere eines Generators, beschrieben. Das Kühltragelement umfasst eine erste Platte mit einer oberen Fläche und einer unteren Fläche, wobei die obere Fläche der ersten Platte Verankerungsmittel zum Verankern eines Statorblechpakets umfasst, das an dem Kühltragelement befestigbar ist, eine zweite Platte mit einer oberen Fläche und einer unteren Fläche, wobei die untere Fläche der zweiten Platte eine Einlassöffnung und eine Auslassöffnung umfasst. Die erste Platte ist so an der zweiten Platte befestigt, dass die untere Oberfläche der ersten Platte der oberen Oberfläche der zweiten Platte zugewandt ist. Trennelemente sind zwischen der unteren Fläche der ersten Platte und der oberen Fläche der zweiten Fläche so angeordnet, dass ein Kühlkanal zwischen der ersten Platte und der zweiten Platte vorgesehen ist und ein Kühlfluid von der Einlassöffnung durch den Kühlkanal zur Auslassöffnung geleitet werden kann, um Wärme von dem Statorblechpaket abzuführen.

Die EP 2 838 182 A1 beschreibt einen Stator mit nicht fortlaufender Einschichtwicklung, der entlang mindestens eines Radialschnitts segmentierbar ist, der senkrecht zu einer Transversalebene des Stators verläuft und sich mit keiner Spule der Einschichtwicklung schneidet.

Nachteilig bei diesen Ausführungen ist jedoch der enorme mechanische Aufwand, um eine stabile Fixierung der Statorsegmente und des Stators in der Gondel zu erreichen. Nachdem eine ausreichende Fixierung nur mit dementsprechendem mechanischem Aufwand und damit zusätzlichem Gewicht verbunden ist, ist dies insbesondere in den Gondeln von Windkraftanlagen nachteilig.

Ausgehend davon liegt der Erfindung die Aufgabe zugrunde, eine Tragstruktur für die Statorsegmente eines Stators zu schaffen, die besonders leicht und dennoch die im Betrieb der Windkraftanlage auftretenden Kräfte beherrscht und aufnehmen kann.

Die Lösung der gestellten Aufgabe gelingt durch eine Tragstruktur eines Blechpakets eines Statorsegments einer dynamoelektrischen Maschine mit Außenläufer nach Anspruch 1.

Die Lösung der gestellten Aufgabe gelingt ebenfalls durch ein Statorsegment nach Anspruch 4. Damit bildet das Blechpaket, unabhängig davon, ob es einstückig ausgebildet oder aus axial voneinander beabstandeten Teilblechpaketen zusammengesetzt ist, einen stabilen Verband.

Die Lösung der gestellten Aufgabe gelingt ebenfalls durch ein Statorsegment einer dynamoelektrischen Maschine nach Anspruch 5. Auch damit bildet das Blechpaket, unabhängig davon, ob es einstückig ausgebildet oder aus axial voneinander beabstandeten Teilblechpaketen zusammengesetzt ist, einen stabilen Verband. Dabei können sowohl die jeweiligen Bleche der Teilblechpakete oder auch die Bleche des Gesamtpakets verklebt sein.

Die Lösung der gestellten Aufgabe gelingt ebenfalls durch einen Stator nach Anspruch 6, mit erfindungsgemäßen Statorsegmenten, wobei die Statorsegmente in Umfangsrichtung betrachtet mechanisch zumindest mit benachbart anordenbaren Teilfugenplatten eines weiteren Statorsegments verbunden sind.

Eine zusätzliche Fixierung der Statorsegmente an einer radial innenliegenden Stützstruktur mittels einer form- oder stoffschlüssigen Verbindung führt zu einer weiteren Versteifung des gesamten Stators.

Die Lösung der gestellten Aufgabe gelingt ebenfalls durch einen Außenläufergenerator nach Anspruch 8, der in geeigneter Art und Weise mit einem Maschinenhausrahmen der Windkraftanlage verwindungssteif verbunden ist, der wiederrum die Gondel der Windkraftanlage trägt.

Die Lösung der gestellten Aufgabe gelingt ebenfalls durch eine Windkraftanlage nach Anspruch 9, wobei dadurch bei vergleichsweise geringem Gewicht des Stators und damit der Gondel u.a. die Montage der gesamten Windkraftanlage vereinfacht wird.

Die Lösung der gestellten Aufgabe gelingt ebenfalls durch ein Herstellverfahren eines erfindungsgemäßen Statorsegments nach Anspruch 10.

Die Lösung der gestellten Aufgabe gelingt ebenfalls durch ein Herstellverfahren nach Anspruch 11.

Erfindungsgemäß weist nunmehr die Tragstruktur nur noch die notwendigen mechanischen Teile auf, um eine ausreichende Fixierung und Stabilisierung der Statorsegmente und des Stators und somit letztendlich des gesamten Außenläufergenerators zu erhalten, um die im Betrieb der Windkraftanlage u.a. auftretenden Kräfte aufnehmen zu können.

Ebenso kann durch diese Ausbildung der Tragstruktur eine hohe Genauigkeit bei der Luftspaltkontur des Außenläufergenerators gewährleistet werden. Der Luftspalt zwischen dem Rotor des Außenläufergenerators und dem Stator lässt sich durch diesen Aufbau genauer und nachhaltiger einstellen.

Durch das Element mit polygonförmigen Ausnehmungen, das auf der radial innenliegenden Seite der Tragstruktur und die einzelnen Leisten und/oder die Druckplatten und/oder die Teilfugenplatten, insbesondere durch Schweißverbindungen miteinander fixiert, ist nunmehr die Tragstruktur aus relativ einfachen Grundelementen aufgebaut. Sie bildet somit zusammen mit dem Blechpaket eine selbsttragende vergleichsweise leichte Sandwich-Konstruktion.

Das Element stellt somit eine Art Basisplatte der Tragstruktur dar.

Der umgriffene Raum von Teilfugenplatten und Druckplatten ist auf der konkaven Seite durch das Element und auf der konvexen Seite durch das Blechpaket eingenommen.

Dabei werden vor allem die tragenden Eigenschaften des Blechpakets, das von der konvexen Seite auf die Tragstruktur aufgesetzt und verschweißt wird, in die Tragstruktur integriert. Somit übernimmt das Blechpaket des Statorsegments nicht nur eine elektromagnetische Funktion zur Bildung und Führung des elektromagnetischen Feldes sondern auch gleichzeitig eine mechanische Tragfunktion.

Das als Netzblech ausgebildete Element wird an dem konkaven Teil der Tragstruktur positioniert und fixiert. Das Blechpaket wird dabei auf den konvexen Teil der Tragstruktur positioniert und fixiert.

Vorteilhafterweise wird damit die geforderte Steifigkeit eines Statorsegments bei einem Minimum an Material und Wandstärke erreicht, was wiederum die Voraussetzung für ein vergleichsweise geringes Gewicht und niedrige Kosten darstellt. Das geringe Gewicht ist insbesondere beim Transport der Statorsegmente, der Montage des Stators in einer Gondel einer Windkraftanlage besonders vorteilhaft.

Bisher bekannte Tangentialrippen in Statorsegmenten bzw. im Stator lassen sich somit komplett eliminieren. Dies schafft neben der Gewichtsersparnis eine fertigungsgerechtere einfachere Ausführung möglichst aller Schweißnähte durch eine vergleichsweise bessere Zugänglichkeit der vorgegebenen Schweißpunkte in der Tragstruktur.

Vorteilhafterweise ist das Element aus nicht magnetischem Blech, das auf der radial innenliegenden Seite der Tragstruktur also der konkaven Seite vorgesehen ist und die einzelnen Leistenelemente und/oder die Druckplatten und/oder die Teilfugenplatten insbesondere durch Schweißverbindungen miteinander fixiert. Damit ist nunmehr die Tragstruktur aus relativ einfachen Grundelementen aufgebaut und bildet somit zusammen mit dem Blechpaket eines Statorsegments eine selbsttragende Sandwich-Konstruktion.

Die Ausnehmungen des Elements bzw. des Blechs sind rundlich oder eckenförmig ausgestaltet. Das Blech bildet somit ein Netzblech. Damit wird das Gewicht weiter reduziert, ohne die damit verbundenen Steifigkeit in der relevanten Ebene des Elements bzw. Blechs zu beeinträchtigen.

Vorteilhafterweise wird das Netzblech dabei so ausgeführt, dass die Maschenweite in Richtung der Krümmung der Tragstruktur, welche Krümmung durch die gekrümmtem Druckplatten vorgegeben ist, dem Abstand der Leisten bzw. Rippen entspricht oder dass die Maschenweite in Richtung der Krümmung einem ganzzahligen Vielfachen des Abstands der Leistenelemente entspricht. Damit wird das Gewicht weiter optimiert.

Die Maschen werden vorteilhafterweise durch parallel und senkrecht zu den Leisten bzw. Rippen verlaufende Stegen gebildet. Dabei werden die Stege in Richtung der Leisten mit diesen an ihren langen Schmalseiten zumindest abschnittweise verschweißt. Um dabei ausreichende Schweißpunkte setzen zu können, sind zumindest an den Schweißpunkten die Stege mindesten zweimal so breit wie die dort vorhandene Breite der Leiste. D.h. die Leisten können in Ihrem Verlauf von einer Druckplatte zu anderen geschwungen ausgeführt sein, insbesondere so, dass unterschiedliche Dicken der Leisten in Höhe und oder Breite vorliegen. Das führt zu einer weiteren Gewichtersparnis ohne die mechanische Festigkeit der Tragstruktur zu beeinträchtigen.

Durch das Netzblech an der konkaven Seite der Tragstruktur und dem Blechpaket an der konvexen Seite der Tragstruktur wird zusammen mit den Druckplatten und Druckfingern also auch den Teilfugenplatten eine ausreichende Positionierung und Fixierung der Statorsegmente gewährleistet. Damit lässt sich der Luftspalt des Außenläufergenerators sehr genau einstellen.

Teilfugenplatte, Druckplatte und Netzblech sind vorzugsweise aus handelsüblichen Stahlsorten, was die Materialkosten einer derartigen Tragstruktur weiter reduziert und die Verarbeitung erleichtert.

Die Erfindung sowie weitere vorteilhafte Ausgestaltungen der Erfindung werden anhand prinzipiell dargestellter Ausführungsbeispiele näher erläutert; darin zeigen:
- FIG 1: eine perspektivische Darstellung einer Tragstruktur,
- FIG 2: eine perspektivische Darstellung einer weiteren Tragstruktur,
- FIG 3: einen Querschnitt eines Statorsegments ohne Wicklungen,
- FIG 4: eine weitere Darstellung eines Statorsegments,
- FIG 5: eine Tragstruktur mit einstückigem Blechpaket,
- FIG 6: eine Tragstruktur mit versetzt angeordnetem Netzblech,
- FIG 7: einen prinzipiellen Längsschnitt durch einen Außenläufergenerators einer direkt angetriebenen Windkraftanlage.

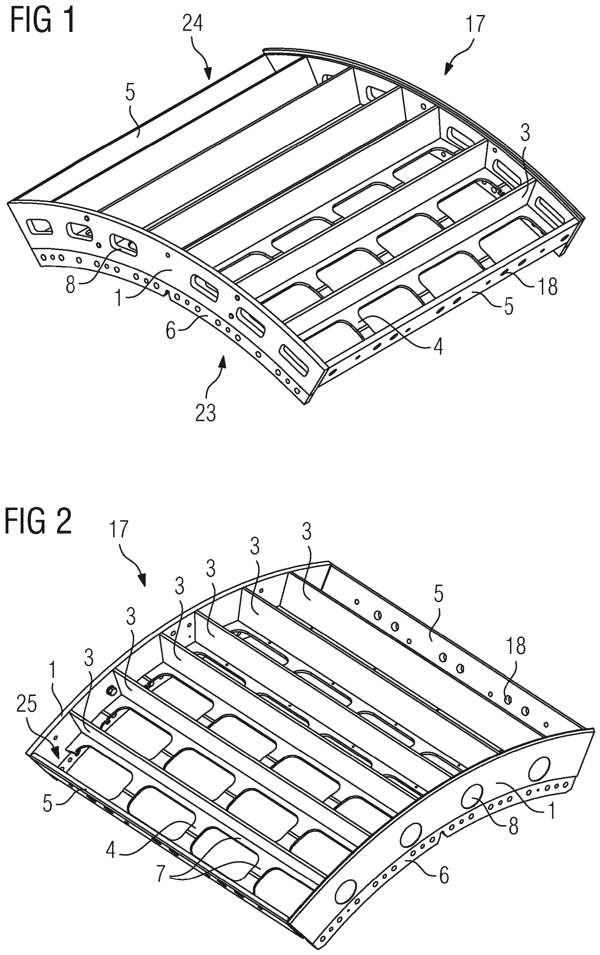

FIG 1 zeigt eine Tragstruktur 17, die im weiteren Herstellungsverlauf die Basis eines Statorsegments 13 eines Stators 12 eines direkt angetriebenen Außenläufergenerators einer Windkraftanlage bildet.

Diese Tragstruktur 17 ist gekrümmt ausgeführt und weist Teilfugenplatten 5 auf, die im eingebauten Zustand der Statorsegmente 13 einen mechanischen Kontakt zu in Umfangsrichtung direkt benachbarten weiteren Statorsegmenten 13 herstellen. Die Tragstruktur 17 weist einen konkaven Teil 23 und einen konvexen Teil 24 auf. An den Stirnseiten der Tragstruktur 17 befinden sich Druckplatten 1, vorzugsweise mit Öffnungen 8, durch die im Betrieb der Windkraftanlage Kühlluft zur Kühlung des Blechpakets 9 des Stators 12 zugeführt oder abgeführt werden kann.

In einer anderen Ausführform sind die Druckplatten 1 geschlossen, d.h. sie sind ohne Öffnungen 8 ausgeführt. Damit ist die Tragstruktur 17 lediglich oben und unten mehr oder weniger offen ausgeführt. In einer Tangentialebene betrachtet ist die Tragstruktur 17 somit geschlossen.

Radial weiter innen sind auf der konkaven Seite der Tragstruktur 17 Flansche 6 der Druckplatte 1 vorgesehen, die eine Anbindung an weitere Befestigungsvorrichtungen z.B. einer Lagereinheit 16 der direkt angetriebenen Windkraftanlage ermöglichen.

Zwischen den Druckplatten 1 verlaufen im Wesentlichen radial ausgerichtete Leistenelemente, Leisten oder Rippen 3, die mit einem Netzblech 4 stoffschlüssig, insbesondere durch Verschweißung verbunden sind. Dabei entspricht in diesem Fall der Abstand der zwischen den Druckplatten 1 verlaufenden Stege 7 des Netzbleches 4, also die Maschenweite, dem Abstand der Rippen 3. Die Stege 7 sind dabei mindestens zweimal so breit, wie die Leistenelemente bzw. Rippen 3 an ihrer Verbindungsstelle mit den Rippen 3. Diese Voraussetzung ist vor allem bei variierenden Dicken von Leisten 3 und/oder den Stegen 7 wichtig, um eine stoffschlüssige Verbindung von Steg 7 und Rippe 3 zu gewährleisten.

Die Leisten bzw. Rippen 3 verlaufen vorzugsweise auf bzw. an den Stegen 7, um grundsätzlich eine punkt- oder linienförmige Verschweißung von Rippen 3 und Stegen 7 des Netzbleches 4 an diesen Stegen 7 zu ermöglichen.

FIG 2 zeigt in einer perspektivischen Darstellung eine weitere, ähnliche Ausführung der Tragstruktur 17, wobei die Teilfugenbleche 5 Befestigungsöffnungen 18 aufweisen, um mit weiteren Teilfugenblechen 5 benachbarter Statorsegmente 13 mechanisch verbunden zu werden. Ebenso zeigt die Druckplatte 1 Öffnungen 8, die in diesem Fall rund ausgeführt sind. Das Netzblech 4 weist zwischen seinen axial verlaufenden Stegen 7, also den Stegen 7 in Umfangsrichtung der Krümmung folgend, abschnittsweise leichte Materialverdünnungen 21 auf, um eine leichte Knickung des Netzblechs 4 zum Ausbilden der Krümmung zu ermöglichen. Dies ist vor allem bei dickeren Netzblechen 4 von Vorteil, deren Dicke ungefähr der Dicke der Druckplatten entspricht oder noch dicker ausgeführt sind.

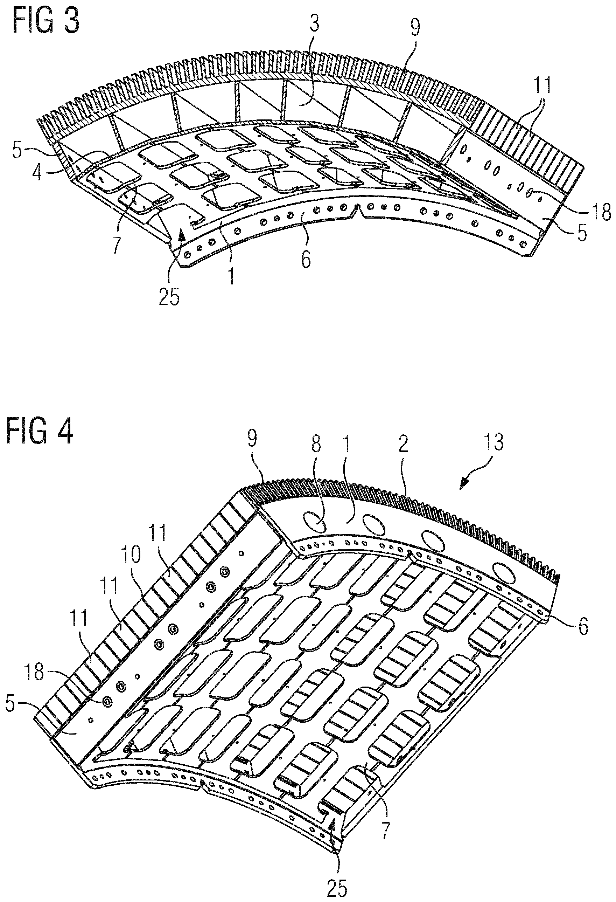

FIG 3 zeigt in einem Querschnitt eines Statorsegments die Anordnung des Blechpakets 9 auf den leistenförmigen Elementen bzw. Rippen 3 und zwischen den Druckplatten 1, als auch die Fixierung der Rippen 3 auf den axial verlaufenden Stegen 7 des Netzbleches 4. Ebenso ist die Anordnung des Flansches 6 der Druckplatte 1 zu sehen, mit denen die Statorsegmente 13 an weiteren Befestigungselementen einer nicht näher dargestellten Lagereinheit 16 oder Stützstruktur 22 fixierbar sind.

Das Netzblech 4 weist in zumindest einer Ecke eine offene Masche 25 auf, um u.a. die bei den Schweißvorgängen auftretenden Kräfte besser kompensieren zu können.

FIG 4 zeigt in einer weiteren perspektivischen Darstellung ein Statorsegment 13 ohne das Wicklungssystem, wobei durch die Druckplatte 1 als auch durch Druckfinger 2 das axial geschichtete Blechpaket 9 fixiert, positioniert und paketiert wird. Das Blechpaket 9 ist in dieser Darstellung durch axiale Aneinanderreihung von Teilblechpaketen 11 aufgebaut. Zwischen den Teilblechpaketen 11 entstehen durch Beabstandung dieser Teilblechpakete 11 radiale Kühlschlitze 10, die eine Kühlung des Statorsegments 13 und dadurch des Stators im Betrieb des Generators oder Motors ermöglicht. Die Beabstandung erfolgt durch radial verlaufende Zwischenelemente die bei der Paketierung des Blechpakets 9 eingesetzt werden.

Das axial geschichtete Blechpaket 9 des Statorsegments 13 kann alternativ auch durch die Druckplatte 1 und eine Verklebung mittels Backlack der ersten bzw. letzten Bleche des Blechpakets 9 fixiert, positioniert und paketiert werden, so dass dann nicht zwangsläufig Druckfinger 2 vorhanden sein müssen. Dabei werden jeweils drei bis ca. 20 Bleche mit Backlack versehen. Bei einigen Ausführungen kann dies die Herstellung eines Statorsegments 13 vereinfachen.

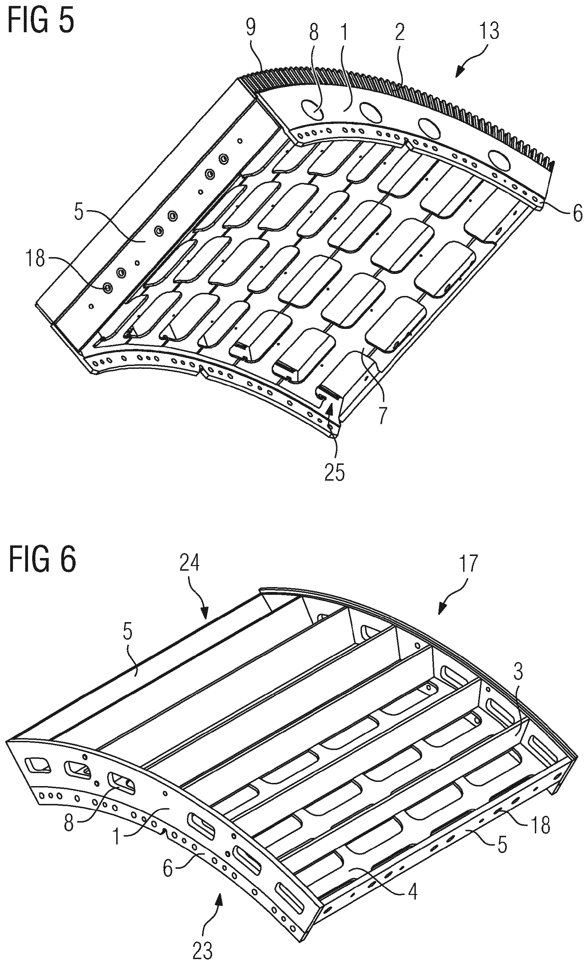

FIG 5 zeigt in einer weiteren perspektivischen Darstellung ein Statorsegment 13 ohne das Wicklungssystem, wobei durch die Druckplatte 1 als auch durch Druckfinger 2 das axial geschichtete Blechpaket 9 fixiert, positioniert und paketiert wird. Das Blechpaket 9 ist in dieser Darstellung als einstückiges Blechpaket 9 ausgebildet, das keine radial verlaufenden Abstandshalter aufweist, die Kühlschlitze 10 zwischen den Teilblechpaketen 11 bilden.

FIG 6 zeigt in perspektivischer Darstellung die Tragstruktur 17, bei der die Rippen 3 "über" die Maschen des Netzblechs 4 laufen. Mit anderen Worten, die Rippen 3, die von einer Seite des Blechpakets 9, also von einer Druckplatte 1 zur anderen Druckplatte 1 verlaufen, weisen nur bei auf den tangential verlaufen Stegen Kontaktpunkte mit dem Netzblech 4 auf. Nur dort findet demnach eine Verbindung zwischen den Rippen 3 und dem Netzblech 4, insbesondere den tangential verlaufenden Stegen statt. Bei der Verbindung handelt es sich vorzugsweise um eine Schweißverbindung.

Die Schweißverbindungen sind bei den vorgestellten Ausführungen vorzugsweise punktuell oder linienförmig ausgeführt.

In einer möglichen Ausführung ist die Dicke der nahezu quaderförmig ausgeführten Leisten bzw. Leistenelemente bzw. Rippen aber auch des Netzbleches dabei ungefähr doppelt so dick wie die Druckplatten 1 oder Teilfugenplatten 5.

In einer weiteren möglichen Ausführung ist die Dicke der nahezu quaderförmig ausgeführten Leisten bzw. Leistenelemente bzw. Rippen 3, aber auch des Netzbleches 4 ungefähr gleich der Dicke von Druckplatten 1 oder Teilfugenplatten 5.

Diese "Dickenausführungen" hängen u.a. von den möglichen zu erwartenden mechanischen Belastungen im Betrieb der Windkraftanlage ab.

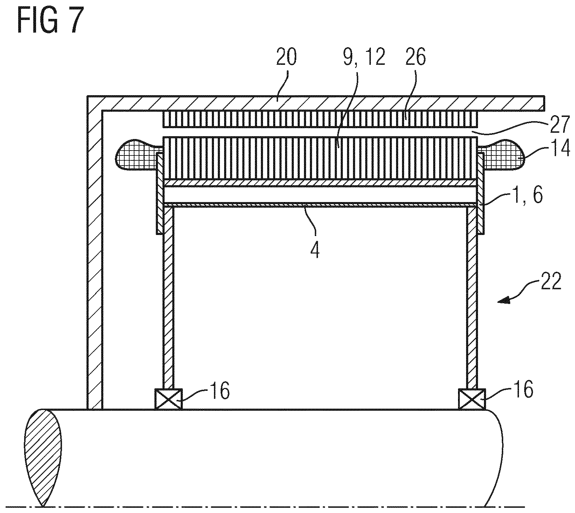

FIG 7 zeigt in einem prinzipiellen Längsschnitt die Anordnung des Stators 12 auf einer Lagereinheit 16. Ebenso zeigt diese Darstellung den Rotor 20 als Außenläufer des Generators, der zum Luftspalt 27 der dynamoelektrischen Maschine gewandt Permanentmagnete 26 aufweist. Das dabei prinzipiell dargestellt Ein- oder Zweischicht-Wicklungssystem 14 kann dabei aus Formspulen gleicher oder ungleicher Spulenweite ausgeführt sein. Ebenso kann es sich dabei um gesehnte Wicklungen, als auch um Schleifenwicklungen handeln. Vorzugsweise wird jedes Statorsegment 13 mit seinem kompletten Wicklungssystem 14 geliefert und auf der Baustelle zu einem Stator 12 elektrisch verbunden.

Ein derartiger Aufbau eignet sich nicht nur für Windkraftgeneratoren, ebenso ist die Tragstruktur 17 auch als Basis für große Motoren bei Antrieben z.B. in der Rohstoffindustrie geeignet.

## Patentansprüche

1. Tragstruktur (17) eines Blechpakets (9) eines Statorsegments (13) einer dynamoelektrischen Maschine mit Außenläufer mit
- zwei Teilfugenplatten (5), die im eingebauten Zustand der Statorsegmente (13) einen mechanischen Kontakt zu in Umfangsrichtung direkt benachbarten weiteren Statorsegmenten (13) herstellen und zwei gekrümmt ausgeführten Druckplatten (1), die sich jeweils mit ihren Längsseiten gegenüber liegen, einen vorgebbaren Raum umgreifen und an ihren Stoßkanten verbindbar sind,
- im Wesentlichen radialen ausgerichteten Leisten bzw. Rippen (3), die zwischen den Druckplatten (1) und parallel zu den Teilfugenplatten (5) liegen,
- zumindest einem Element mit polygonförmigen Ausnehmungen, das mit einer Längsseite der Rippen (3) verbunden ist und eine Basisplatte der Tragstruktur (17) bildet,
**dadurch gekennzeichnet, dass**
- das Element eine netzartige Struktur aufweist und als Netzblech (4) ausgebildet ist,
- wobei der umgriffene Raum von Teilfugenplatten (5) und Druckplatten (1) auf der konkaven Seite durch das Element und auf der konvexen Seite durch das Blechpaket (9) eingenommen ist,
- wobei vor allem die tragenden Eigenschaften des Blechpakets (9), das von der konvexen Seite auf die Tragstruktur (17) aufgesetzt und verschweißt wird, in die Tragstruktur integriert sind,
- wobei somit das Blechpaket (9) des Statorsegments (13) nicht nur eine elektromagnetische Funktion zur Bildung und Führung des elektromagnetischen Feldes sondern auch gleichzeitig eine mechanische Tragfunktion übernimmt.

2. Tragstruktur (17) nach Anspruch 1, **dadurch gekennzeichnet, dass** das Element aus Blech ist.

3. Tragstruktur (17) nach einem oder mehrerer der vorhergehenden Ansprüche, **dadurch gekennzeichnet, dass** das Element als Netzblech (4) ausgeführt ist, dessen Maschenweite dem Abstand der Rippen (3) oder dessen Maschenweite einem ganzzahligen Vielfachen des Abstand der Rippen (3) entspricht.

4. Statorsegment (13) einer dynamoelektrischen Maschine mit einer Tragstruktur (17) nach einem oder mehreren der vorhergehenden Ansprüche, wobei die Druckplatten (1) zusammen mit radial angeordneten Druckfingern (2) an den Stirnseiten eines Blechpakets (9) dieses Blechpaket (9) axial fixieren.

5. Statorsegment (13) einer dynamoelektrischen Maschine mit einer Tragstruktur (17) nach einem oder mehreren der vorhergehenden Ansprüche 1 bis 3, wobei eine axiale Fixierung des Blechpakets (9) durch Druckplatten (1) und durch eine Verklebung der letzten bzw. ersten Bleche des Blechpakets (9) durch Backlack erfolgt.

6. Stator (12) einer dynamoelektrischen Maschine mit Statorsegmenten (13) nach Anspruch 4 oder 5, **dadurch gekennzeichnet, dass** die Statorsegmente (13) in Umfangsrichtung betrachtet mechanisch zumindest mit benachbart anordenbaren Teilfugenplatten (5) eines weiteren Statorsegments (13) verbunden sind.

7. Stator (12) nach Anspruch 6, **dadurch gekennzeichnet, dass** die Statorsegmente (13) über die Teilfugenplatten (5) und durch eine über die Statorsegmente (13) ersteckende Stützstruktur (22) miteinander verbunden sind.

8. Außenläufergenerator oder Außenläufermotor mit einem Stator (12) nach Anspruch 6 oder 7, wobei der Rotor Permanentmagnete (26) aufweist.

9. Windkraftanlage mit einem Außenläufergenerator nach Anspruch 8.

10. Herstellverfahren eines Statorsegments (13) nach Anspruch 4 oder 5 durch folgende Schritte:
- Bereitstellen einer Tragstruktur (17), die Teilfugenplatten (5), Rippen (3) und Druckplatten (1) aufweist, die auf einer Längsseite der Rippen (3) durch ein als Netzblech (4) ausgebildetes Element mit polygonförmigen Ausnehmungen miteinander verbunden werden,
- anordnen eines vorpaketierten Blechpakets (9) des Statorsegments (13) auf der Tragstruktur (17) auf der dem Netzblech (4) abgewandten Seite der Leisten (3),
- Einsetzen eines Wicklungssystems, insbesondere Spulenwicklungssystems in die Nuten des Blechpakets (9) des Statorsegments (13).

11. Herstellverfahren eines Stators (12) nach Anspruch 6 oder 7 durch folgende Schritte:
- Zusammensetzen einzelner Statorsegmente (13), indem die Statorsegmente (13) über ihre Teilfugenbleche (5) und/oder durch eine über die Statorsegmente (13) ersteckende Stützstruktur (22) miteinander verbunden werden,
- elektrische Verbindung des Wicklungssystems der einzelnen Spulen der Statorsegmente (13) untereinander und mit zumindest einem Umrichter.

## Claims

1. Support structure (17) for a laminated core (9) of a stator segment (13) of a dynamoelectric machine having an external rotor, having
- two joint plates (5) which, in the installed state of the stator segments 13, establish a mechanical contact with further stator segments (13) directly adjacent in the peripheral direction, and two curved pressure plates (1), the respective longitudinal faces of which are in each case mutually opposed, encompass a predefinable space and can be connected at their abutting edges,
- substantially radial bars or ribs (3) which lie between the pressure plates (1) and parallel to the joint plates (5),
- at least one element with polygonal cut-outs, which is connected to a longitudinal face of the ribs (3) and forms a base plate of the support structure (17),
**characterised in that**
- the element has a mesh-type structure and is formed as a mesh sheet (4),
- wherein the space encompassed by joint plates (5) and pressure plates (1) is received on the concave side by the element and on the convex side by the laminated core (9),
- wherein in particular, the supporting properties of the laminated core (9), which is fitted and welded from the convex side onto the support structure (17), are then integrated into the support structure,
- wherein the laminated core (9) of the stator segment (13) consequently assumes not only an electromagnetic function of forming and directing the electromagnetic field, but also simultaneously a mechanical supporting function.

2. Support structure (17) according to claim 1, **characterised in that** the element is made of sheet metal.

3. Support structure (17) according to one or more of the preceding claims, **characterised in that** the element is formed as a mesh sheet (4), the mesh size of which corresponds to the gap in the ribs (3) or to an integer multiple of the gap in the ribs (3).

4. Stator segment (13) of a dynamoelectric machine having a support structure (17) according to one or more of the preceding claims, wherein the pressure plates (1), together with pressure fingers (2) arranged radially on the end faces of a laminated core (9), axially fasten this laminated core (9) .

5. Stator segment (13) of a dynamoelectric machine having a support structure (17) according to one or more of the preceding claims 1 to 3, wherein an axial fastening of the laminated core (9) is carried out by means of pressure plates (1) and by bonding the last and first layers of the laminated core (9) using bonding varnish.

6. Stator (12) of a dynamoelectric machine having stator segments (13) according to claim 4 or 5, **characterised in that**, when viewed in the peripheral direction, the stator segments (13) are mechanically connected at least to joint plates (5), which can be arranged adjacently, of a further stator segment (13).

7. Stator (12) according to claim 6, **characterised in that** the stator segments (13) are connected together by the joint plates (5) and by means of a sub-structure (22) extending over the stator segments (13).

8. External rotor generator or external rotor motor having a stator (12) according to claim 6 or 7, wherein the rotor has permanent magnets (26).

9. Wind turbine having an external rotor generator according to claim 8.

10. Manufacturing process for a stator segment (13) according to claim 4 or 5, by means of the following steps:
- Providing a support structure (17) having joint plates (5), ribs (3) and pressure plates (1) connected to one another on a longitudinal face of the ribs (3) by means of an element, embodied as a mesh sheet (4), with polygonal cut-outs,
- Arranging a pre-packaged laminated core (9) of the stator segment (13) on the support structure (17) on the side of the bars (3) facing away from the mesh sheet (4),
- Inserting a winding system, in particular a coil winding system, into the grooves in the laminated core (9) of the stator segment (13).

11. Manufacturing process for a stator (12) according to claim 6 or 7, by means of the following steps:
- Assembling individual stator segments (13) by connecting the stator segments (13) together by their joint sheets (5) and/or by means of a sub-structure (22) extending over the stator segments (13),
- Establishing an electrical connection with a winding system for the individual coils of the stator segments (13) and with at least one converter.

## Revendications

1. Structure (17) de support d'un paquet (9) de tôles, d'un segment (13) statorique, d'une machine dynamo-électrique à rotor extérieur, comprenant :
- deux plaques (5) de jonction partielle, qui, lorsque les segments (13) statoriques sont à l'état monté, donnent un contact mécanique avec d'autres segments (13) statoriques voisins directement dans la direction du pourtour, et deux plaques (1) de pression réalisées de manière incurvées, qui sont l'une en face de l'autre respectivement par leurs côtés longitudinaux, qui entourent un espace pouvant être donné à l'avance et qui peuvent être reliés sur leurs bords,
- des réglettes ou des nervures (3), qui sont dirigées sensiblement radialement et qui se trouvent entre les plaques (1) de pression et sont parallèles aux plaques (5) de jonction partielle,
- au moins un élément ayant des évidements polygonaux, qui est relié à un côté longitudinal des nervures (3) et qui forment une plaque de base de la structure (17) de support,
**caractérisée en ce que**,
- l'élément a une structure de type en réseau et est constitué sous la forme d'une tôle (4) réticulée,
- dans lequel l'espace entouré par les plaques (5) de jonction partielle et les plaques (1) de pression est pris du côté concave par l'élément et du côté convexe par le paquet (9) de tôles,
- dans lequel surtout, les propriétés portantes du paquet (9) de tôles, qui est mis par le côté convexe sur la structure (17) de support et qui est soudé, sont intégrées à la structure de support,
- dans lequel ainsi le paquet (9) de tôles du segment (13) statorique prend en charge non seulement une fonction électromagnétique pour la formation et la conduite du champ électromagnétique, mais aussi en même temps une fonction mécanique de support.

2. Structure (17) de support suivant la revendication 1, **caractérisée en ce que** l'élément est en tôle.

3. Structure (17) suivant l'une ou plusieurs des revendications précédentes, **caractérisée en ce que** l'élément est réalisé sous la forme d'une tôle (4) réticulée, dont la largeur de maille correspond à la distance entre les nervures (3) ou dont la largeur de maille correspond à un multiple en nombres entiers de la distance entre les nervures (3).

4. Segment (13) statorique d'une machine dynamo-électrique ayant une structure (17) de support, suivant l'une ou plusieurs des revendications précédentes, dans lequel les plaques (1) de pression, ensemble avec des doigts (2) de pression disposé radialement sur les côtés frontaux d'un paquet (9) de tôles immobilise axialement ce paquet (9) de tôles.

5. Segment (13) statorique d'une machine dynamo-électrique ayant une structure (17) de support, suivant l'une ou plusieurs des revendications 1 à 3 précédentes, dans lequel une immobilisation axiale du paquet (9) de tôles a lieu par des plaques (1) de pression et par un collage de la dernière ou de la première tôle du paquet (9) de tôles par un vernis arrière.

6. Stator (12) d'une machine dynamoélectrique ayant des segments (13) statoriques suivant la revendication 4 ou 5, **caractérisé en ce que** les segments (13) statoriques sont considérés dans la direction du pourtour reliés mécaniquement au moins à des plaques (5) de jonction partielle, pouvant être disposés au voisinage, d'un autre segment (13) statorique.

7. Stator (12) suivant la revendication 6, **caractérisé en ce que** les segments (13) statoriques sont reliés entre eux par les plaques (5) de jonction partielle et par une structure (22) d'appui s'étendant sur les segments (13) statoriques.

8. Générateur à retord extérieur ou moteur à retord extérieur ayant un stator (12) suivant la revendication 6 ou 7, le rotor ayant des aimants (26) permanents.

9. Éolienne ayant un générateur à rotor extérieur suivant la revendication 8.

10. Procédé de fabrication d'un segment (13) statorique suivant la revendication 4 ou 5, par les stades suivants :
- on se procure une structure (17) de support qui a des plaques (5) de jonction partielle, des nervures (3) et des plaques (1) de pression qui sont reliées entre elles, sur un côté longitudinal des nervures (3) par un élément, constitué sous la forme d'une tôle (4) réticulée, à évidement polygonal.
- on met un paquet (9) de tôles, mis auparavant en paquet, du segment (13) statorique sur la structure (17) de support du côté, loin de la tôle (4) réticulée, des réglettes (3),
- on insère un système d'enroulement, notamment un système d'enroulement de bobine, dans les encoches du paquet (9) de tôles du segment (13) statorique.

11. Procédé de fabrication d'un stator (12) suivant la revendication 6 ou 7, par les stades suivants :
- on réunit des segments (13) statoriques individuels en reliant entre eux les segments (13) statoriques, par leur tôle (5) de jonction partielle et/ou par une structure (22) d'appui s'étendant sur le segment (13) statorique,
- on relie électriquement le système d'enroulement des diverses bobines des segments (13) statoriques entre eux et à au moins un onduleur.
